# EUROPEAN PATENT APPLICATION

(11) **EP 0 651 306 A1**
(43) Date of publication of application: **03.05.1995**
(21) Application number: 94830495.1
(22) Date of filing: 24.10.1994
(51) Int. Cl.: G05D 11/00, G01N 1/38, G01G 15/00

(54) **Apparatus for preparing solutions**

(30) Priority: 25.10.1993 IT MN930021
(71) Applicant: ALFATECH S.R.L., I-16123 Genova (IT); EPSILON S.R.L., I-20047 Brugherio - MI (IT)
(72) Inventor: Dellacorna, Lorenzo, I-20014 Nerviano-MI (IT); Braggio, Riccardo, I-16100 Genova (IT)
(74) Representative: Petazzi, Guido

(57) **Abstract**

It is described an apparatus (1) for preparing solutions substantially consisted of from at least one solvent and at least a solute that comprises in combination at least one measuring device (2) for detectinc the weighs or the pH value of components, at least a container (3) containing the solution components and located on the measuring device (2), means (5) for metering the solvent located above the container (3), at least a vessel (6) for receiving the solvent, means (7) for drawing solvent connected to the vessel (6) and to the means (5) and provided for moving the solvent into the same metering means and operating and control means (4) for operating and controlling all the steps and the data related to solutions to be prepared. The apparatus (1) is designed to operate automatically during the component metering independently of the component amounts but with a predetermined ratio among the same components.

## Description

The present invention relates to an apparatus for preparing solutions particularly for chemical analysis laboratories.

It is known that in all the analysis laboratories of every chemical branch, one of the most common operation is the preparation of "known titre solutions". This term refers to a mixture conisted of an amount measured in a very accurately way of a component comprising one or more substances called solute (e.g. liquid or solid salt), a volume, measured in the same accurate way, of one or more liquids called solvents.

In fact, these solutions show a very accurate solid-liquid concentration ratio.

In order to obtaining the aforementioned solutions it is necessary to weigh a sample (the solid can be generally found in a powder-like state) and then to transfer it into a glass container (usually called "matress") provided with an indentation located on the neck and provided for indicating a known volume (e.g. 100 ml or 1 liter). Thanks to the shape of the matress, the solvent volume cannot be modified and is an established parameter that fixes strictly the solute amount. Accordingly, it is very important to be extremely accurate during the weighings of the solute.

For example, if someone wishes to obtain a solution of one liter of sodium chloride in water having a concentration of 1 gram/liter, it is absolutely necessary to weigh one gram of salt. In order to obtained what has been just explained, it is essential to use a sufficiently accurate scale, to pour the salt little by little on a suitable sheet, whose tare has been measured, until the scale indicates one grams. If this amount is exceeded, it is necessary to take away the excess in order to obtain exactly one gram. At this time, it is necessary to pour carefully the salt in the matress for not leaving it on the sheet. After that, the solvent is added until the level gets to the measuring indentation on the matress neck. Obviously, if the indentation is passed by mistake, it is necessary to repeat all the process since it is not possible to know the effective volume of the solution since the matress has just one reference indentation.

In view of what has just been described, it can be easily understood that the actually used process systems for preparing solutions show several drawbacks.

For example, all the above described steps are carried out manually by an operator who must weigh the small amounts of solute and transfer them into the matress without loosing the solvent and pour it exactly to the matress indentation.

These steps require great attention and accuracy, for this reason the operator is subjected to a particularly stressful work and, as the time goes on, the possibility of doing mistakes increases considerably.

It has been also noted that every time the solvent amount is wrong, it is necessary to weigh another time the solute having again all the problems due to this operation, that is the operator has difficulties in obtaining an extremely small amount of solute, he/she is not sure he will not disperd it and he/she will have difficulty in pouring the solvent in order to reach precisely the indentation of the matress. These steps are time consuming, especially if they must be repeated several times.

For example it is known how it is extremely important the relation between the solute and solvent amounts because accurate ratios are necessary. From what said above it is clear how it is easy to do mistakes during the measuring and the reading of the amounts. Moreover, during the known art process, all the data are not automatically recorded so that, sometimes, there is the possibility of altering the analysis results.

The object of the present invention is substantially to solve the problems of the prior art, overcoming the above mentioned problems by an apparatus for preparing solutions showing accurate features with reference to the meterings of both the liquid and solid components.

Another object of the present invention is an embodiment of an apparatus able to prepare solutions independently from the solvent volume, keeping at the same time the required ratio between the solute and the solvent.

Another object of the present invention is an embodiment of an apparatus which is able to eliminate the waiting times for carrying out a solutions as compared with the prior art, wherein the set-ups were manually performed by an operator who, in case of a mistake of every kind, had to repeat again the process.

Another object of the present invention is an embodiment of an apparatus which can be easily produced and has a good operation independently of the characteristics needed of the solutions.

The last but not least object of the present invention is an embodiment which is able to record all the operations and store all the data of the solution avoiding the possibility of altering the results and print it after the preparation has ended.

Further features and advantages will be more apparent from the detailed description of an apparatus for preparing solutions according to the present invention described as follows with reference to the accompanying drawings given only as illustrative and therefore they are not intended to be limiting, wherein:
- figure 1 is a schematic view of an apparatus for preparing solutions that is the object of the present invention;

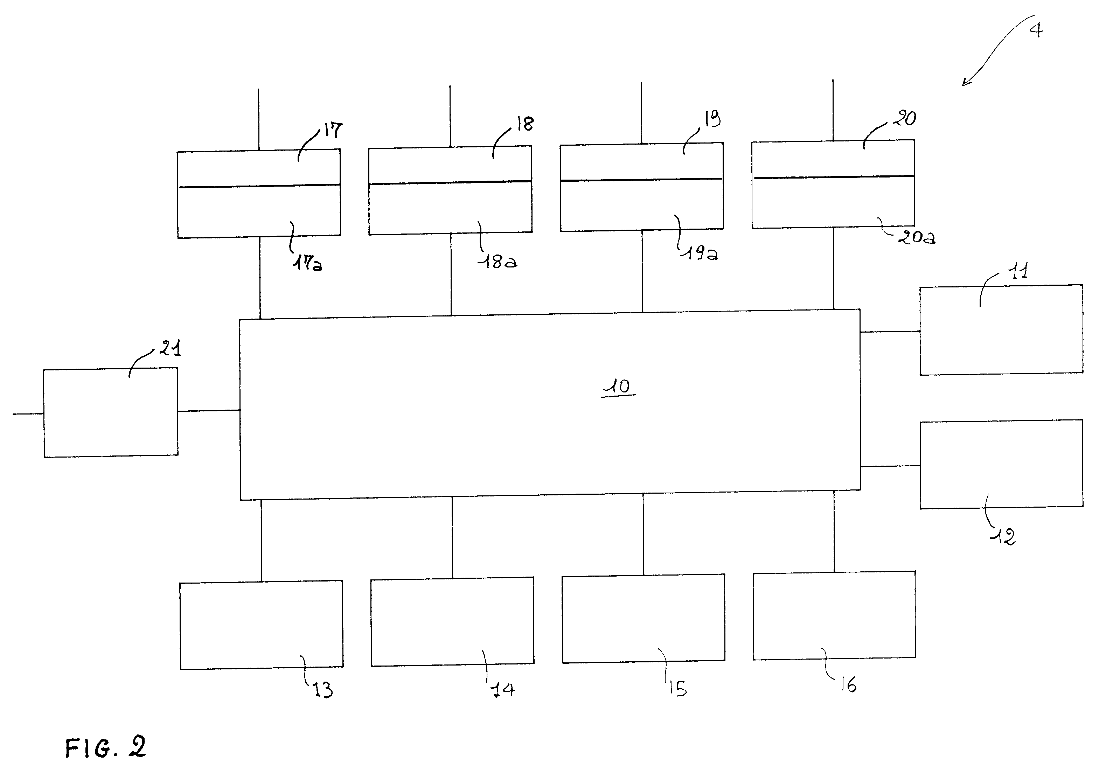

- figure 2 is a schematic view of the operating and control means of the apparatus of the invention;
- figure 3 is a schematic view the metering means of the apparatus of the invention;

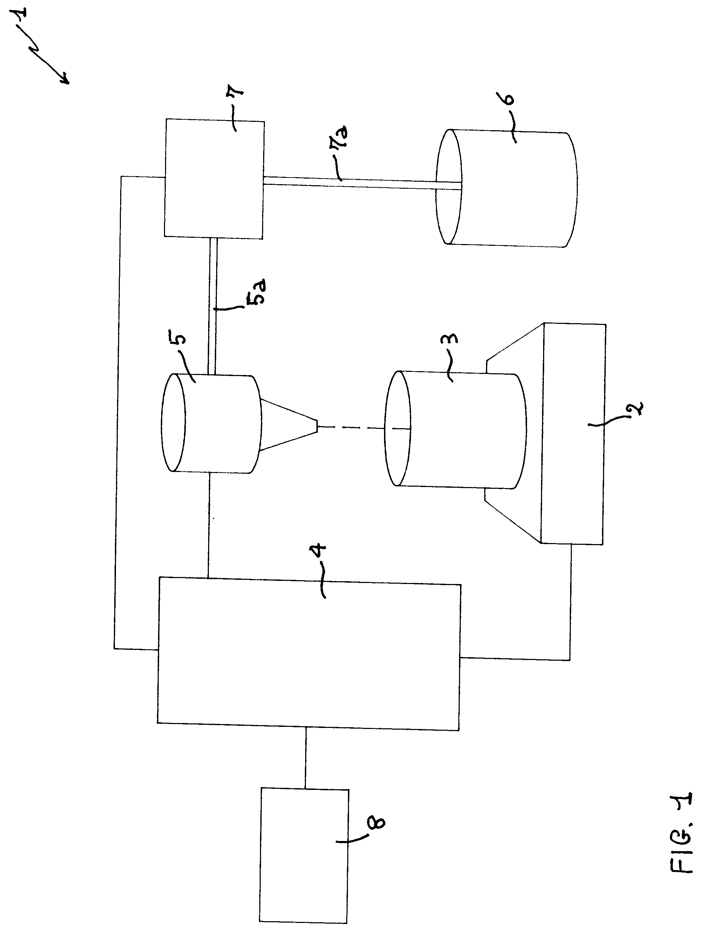

Referring to the figures and particularly to figure 1, numeral 1 generally shows an apparatus for preparing solutions substantially comprising at least a first component (solvent) and at least a second component (solute). The apparatus 1 automatically prepares the meterings of the components independently of the precision of the solute metering by an automatic metering of the solvent/s in order to obtain an accurate and known ratio between the same components.

The apparatus 1 comprises at least a metering device 2 comprising a substantially known scale having a precision at least equal to the requested precision which is necessary for performing the weighings of both the solid and liquid components.

Alternatively, the measuring device can be a pH measuring element.

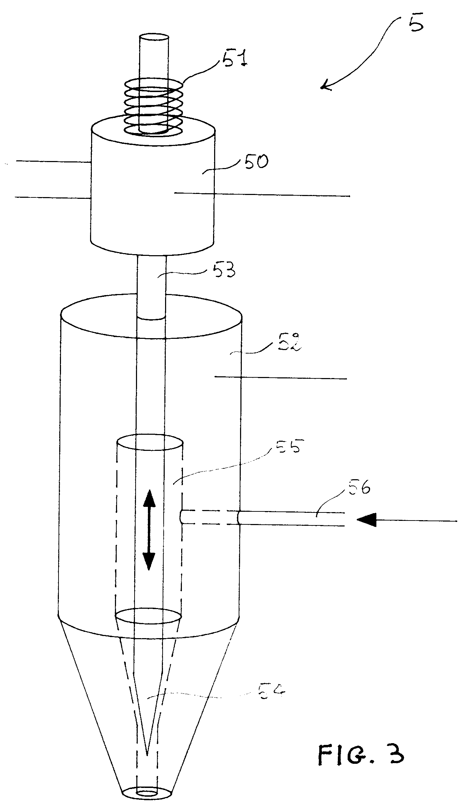

The apparatus 1 is provided with at least one container 3 arranged for receiving the components for the preparation of the solutions and connected with the measuring device 2. Moreover, the apparatus 1 comprises means 5 for metering the solvent located above the container 3. In particular, as clearly shown in figure 3, the metering means 5 substantially comprises a moving electromechanical system formed by an electromagnet 50 having a return element 51 either mechanical, such as a spring, or electromagnetic, for moving a stem 53 connected at one end to a pin 54 arranged to move in a containing body 52. The containing body 52 shows an inlet 56 communicating with drawing means 7.

The chamber 55 of the body 52 is filled with solvent/s and, thanks to the moving of the pin 54 from a stand-by position, wherein the pin adheres against the chamber 55 walls shaped in order to be complementary with the outline of the same pin to an operative position wherein the pin 54 raises allowing the solvent/s to escape to the container 3, it is performed the transferring of said solvent.

According to the present form of embodiment, it is provided at least one vessel 6 arranged to contain at least one solvent.

Moreover, the apparatus 1 comprises drawing solvent means 7 communicating with the vessel 6 and the metering device 5, respectively through one or more hydraulic lines 5a and 7a provided for transferring the solvent from the container 6 to said metering means 5. Such drawing means are basically formed by a pump.

The apparatus comprises also operating and control means 4 connected to the measuring device 2, the drawing means 7 and the metering means 5. Even more particularly stated, the operating an control means 4 comprises central control unit 10 provided for operating all the procedures and data relating to the solutions to be prepared, a plurality of memory units 13, 14, 15 and 16 and each memory unit is connected to the central control unit 10, a display 11 provided for showing the instructions and the data operated by the central control unit 10 and the readings of parameters and information both exiting or entering. The display 11 is connected with the central control unit 10.

Moreover, the operating and control means 4 comprises a keyboard 12, to digitize data and parameters relating to the solutions and the instructions to be input in the central control unit 10 connected to the keyboard. The keyboard comprises function keys arranged to qualify a plurality of functions, such the cleaning, the tare, the aid function, the tables, the introduction of solution data or the callback of memory data, repetition, the metering, the print and the operation end.

The keyboard is washable and comprises also a plurality of keys having alphanumeric characters to input data.

In addition, the plurality of memory unit comprises in particular a first memory unit 13 used as an intermediate memory, a second memory unit 14 used as an operating memory, a third memory unit 15 used only as a table file, conversion data of either from density to volume or form volume to density, and a fourth memory unit 16 provided as file of the prepared solutions.

Moreover. the central control unit 10 is provided with devices for adpating the signal from an electrical standpoint in order to allow a connection 17 to the metering means 5, a connection 18 to the drawing means 7, a connection 19 to the printing means 8 and a connection to the 20 to the measuring device 2.

The apparatus comprises also a plurality of control elements 17a, 18a, 19a and 20a provided for the operation of the metering means 5, of the drawing means 7, of the printing means 8 and of the measuring device 2.

Moreover, the apparatus of the present invention comprises printing means 8 arranged for carrying out labels and tables having the component data and the characteristics of the solution obtained. The printing means 8 comprises a printer connected to the operating and control means 4.

Moreover, according to the present invention, the apparatus 1 comprises operating and actuating means for cleaning the hydraulic lines 5a and 7a and a device for controlling the operative errors.

At last, the apparatus comprises a connection to the electrical feeding source 21 which is the electrical network.

The operation of the apparatus is as follows.

When the apparatus 1 is used before any other steps, an operator must carry out a step for cleaning the hydraulic lines of the solvent used before. In order to carrying out this, the apparatus is provided with a cleaning function key that, by sending a signal to the central control unit, allows the opening of a valve which remain opened until the operator keeps the same key down or at least for a predetermined minimum time.

After this step that is obtained by flowing new solvent, the apparatus is ready to operate and asks the operator if he/she desires to store a new procedure or if he/she wants to use a procedure that is already in the memory. In the former event, the operator must input a series of parameters through the keyboard of the operating and control means and in the latter event it is just necessary to retrieve the storing procedure by a call back function key.

More specifically stated, for example, in the former event, the operator must digitize the following parameters:
- date, hour and name of the operator.
- name of the salt to be solubilized (e.g. NaCl).
- pureness of the salt used (e.g. 99,8%).
- total volume required (e.g. 1 liter).
- number of solvents (e.g. one).
- name of the solvent used (e.g. H₂O).
- solvent density and in case also the temperature.
- final strength required (e.g. 1 g/l).

Once the data have been input, the operator put the solution container on the scale and read the tare, as soon as the scale has been zeroed, the central control unit, by means of the display, asks the operator to add on the scalepan the solute according to the limits showed on the same display. Such limits are a range of the weights calculated by the central control unit in view of the data contained in the operative memory depending from the solution to be obtained, the operator must stay within that range (in former event, for example 0,9 - 1,1 g of NaCl). The above mentioned limits are displayed graphically on the display. A bar having a length proportional to the weight will also show the weight obtained during the weighing.

When the weight is within the limits assigned by the working memory, the latter asks the operator to stop adding solute and allows the metering by a suitable metering function key.

In the case the operator exceeds the upper limit off the weighing allowed, the operative memory inform the operator and inhibits the metering steps until the wirghing is again within the limits allowed either by removing part of the solute or by repeating all the weighing steps.

At this time, the central control unit commands the addition of the solvent/s by actuating a valve the valve/s which form the metering means, until has been obtained a weight that has a right ratio with respect to the solute weighted (1 g/l) after it has calculated the weight of the solvent required depneding on the density, the final strength required, the solute pureness and the weighing made by the operator.

After the above described procedure has ended, the central control unit commands the printing of a sheet or a label containing all the information relating to what has been really produced, for example:
- date and hour,
- operator's name,
- strength of the solution required and obtained,
- name, type, ratio and density of the solvent,
- name/formula of the solute used,
- solute pureness,
- approximate volume of the solution,

Once the just described steps have been performed, the central control unit communicates, through an acoustic signal, that the metering has ended and that the operator can remove the container and can perform a new operation.

In the same way, when the measuring device 2 is a pH measuring element, the apparatus 1, performing the automatic solvent metering step, allows any solution to reach a desidered pH value.

With this condition, the operator puts the pH measuring device in the solution and by the keyboard of the operating and control means digitizes the desidered pH parameters. At this time, the control central unit starts the metering of the predetermined amount of the basic or acidic solvent for obtaining the desidered pH value.

Therefore, the present invention meets the objects cited above.

For example, thanks to the present apparatus it is possible to carry out meterings with extremely accurate characteristics, and however known at the end of the procedure, such as the solute and solvent ratio or the pH value, since all the operations are automatically performed. In this way, it is possible to avoid costly time losses, the necessity to have trained personnel, the fact that the success of the operation depends on the operator ability and mostly the probability of errors.

Moreover, the apparatus is provided for recording, storing and printing all the operations and both the starting and final parameters, preventing in this way the danger of exchanging data, errors and variations of the results as it occurs in the prior art. It has been also noticed that the apparatus is extremely flexible and therefore it is very easy to be used.

Advantageously, the automatized procedure allows the preparation of solutions repeatedly, quickly and accurately, instead of relying on the operator ability.

In addition to what has been described until now, the solute is certainly pour in the container, differently from what occurred in the prior art wherein did not exist checking instruments.

Moreover, thanks to the apparatus of the present invention for preparing solvent amounts, it is possible to be independent of liquid volume, this is also due to the fact that this volume is measured using the weight by taking into account the density, the temperature, etc..

Obviuosly, one can add to the present invention several modifications and variations which are considered within the scope of the inventive step that characterize them.

## Claims

1. Apparatus for preparing solutions substantially consisting of at least one solvent and at least a solute characterized by tha fact that comprises in combination:
- at least one measuring device (2) for detecting the weigh of one solute and one solvent or the pH value ,
- at least a container (3) provided for containing solution components and located on the measuring device (2),
- means (5) for metering the solvent located above the container (3),
- at least a vessel (6) provided for receiving at least a solvent,
- means (7) for drawing solvent connected to the vessel (6) and to the means (5) respectively and provided for moving said solvent from the container (6) into said metering means,
- operating and control means (4) connected to the measuring device (2) and to the drawing means (7) and to the metering means (5), said apparatus (1) being provided for operating automatically during the component metering independently of the component amounts but with a predetermined ratio among the same components.

2. Apparatus according to claim 1, characterised by the fact that comprises printing means (8) provided for carrying out labels and tables having the component data and the characteristic of the solution obtained.

3. Apparatus according to claim 1, characterised by the fact that said operating and control means (4) comprises:
- a central control unit (10) provided for operating all the procedures and the data relating to the solutions to be prepared,
- a plurality of memory unit (13, 14, 15 and 16), each memory unit being connected to the central control unit (10),
- a display (11) provided for showing the instructions and the data operated by the central control unit (10) and for the reading of both the inlet and outlet parameters and information, said display (11) being connected to said central control unit (10),
- a keyboard (12) used to digitize the data and parameters relating to the solutions to be prepared and the instructions to be input in the central control unit (10) and connected to the latter.

4. Apparatus according to claim 1, characterised by the fact that said printing means (8) comprises a printer a printer connected to the sais operating and control means (4).

5. Apparatus according to claim 3, characterised by the fact that said central control unit (10) comprises:
- a device for adapting electrical signals in order to to carry out a connection (17) to said metering means (5),
- a device for adapting said electrical signals in order to carry out a connection (18) to said drawing means (7),
- a device for adapting electrical signals in order to carry out a connection (19) to said printing means (8), and
- a device for adapting electrical signals in order to carry out a connection (20) to said measuring device (2),

6. Apparatus according to claim 1, characterised by the fact that it further comprises a plurality of control elements (17a, 18a, 19a and 20a) provided for operating said metering means (5), said drawing means (7), said printing means (8) and said measuring device (2).

7. Apparatus according to claim 1, characterised by the fact that said plurality of memory units (13, 14, 15 and 16) comprises:
- a first memory unit (13) acting as a working memory,
- a second memory unit (14) used as an operative memory,
- a third memory unit (15) used as data, table file for converting both the density to volume and the weight to volume, and
- a fourth memory unit (16) arranged as a file of the solution prepared.

8. Apparatus according to claim 1, characterised by the fact that said metering means (5) substantially comprises a moving electromechanical system formed by an electromagnet (50) provided with a return element (51) for moving a stem (53) having a pin (54) at one of its ends provided for moving in a chamber (55) from a stand-by position, wherein said pin (54) adheres against the walls of said chamber (55) to an operative position, wherein said pin (54) raises to allow said solvent to escape to the vessel (3).

9. Apparatus according to claim 8, characterised by the fact that said stem (53) and pin (54) are contained in a containing body (52) provided with an inlet (56) for connecting with said drawing means (7).

10. Apparatus according to claim 1, characterised by the fact that comprises a plurality of heys for inputting data provided with alphanumeric characters.

11. Apparatus according to claim 3, characterised by the fact that said keyboard (12) of the operating and control means is washable.

12. Apparatus according to claim 1, characterised by the fact that further comprises operating and control means for cleaning one or more hydraulic lines (5a and 7a).

13. Apparatus according to claim 3, characterised by the fact that said keyboard (12) comprises function keys arranged for qualifying a plurality of function such as the cleaning, the tare, the aid, the tables, the input of solution data or the retrieving of data from the memory, the repetition, the metering, the printing and the end of operations.

14. Apparatus according to claim 1, characterised by the fact that comprises a device for controlling the operative errors.

15. Apparatus according to claim 3, characterised by the fact that said metering means (7) comprises a pump provided for transferring the solvent from the vessel (6) to the metering means (5).

16. Apparatus according to claim 3, characterised by the fact that comprises a connection to a feeding electrical source.

17. Apparatus according to claim 3, characterised by the fact that said feeding source is the electrical network.
